## Europäisches Patentamt
## European Patent Office
## Office européen des brevets

(19)

(11) Veröffentlichungsnummer: **0 216 251**
**B1**

(12) **EUROPÄISCHE PATENTSCHRIFT**

(45) Veröffentlichungstag der Patentschrift:
30.08.89

(51) Int. Cl.⁴: **H04Q 11/04, H04Q 1/50**

(21) Anmeldenummer: **86112515.1**

(22) Anmeldetag: **10.09.86**

(54) Einrichtung zur individuellen Typenkennzeichnung von Kennzeichenumsetzer-Baugruppen.

(30) Priorität: **19.09.85 DE 3533490**

(43) Veröffentlichungstag der Anmeldung:
**01.04.87 Patentblatt 87/14**

(45) Bekanntmachung des Hinweises auf die Patenterteilung:
**30.08.89 Patentblatt 89/35**

(84) Benannte Vertragsstaaten:
**AT BE CH DE FR GB IT LI NL SE**

(56) Entgegenhaltungen:
FR-A- 2 557 751
US-A- 4 385 206

TELCOM REPORT, Beiheft
"Digital-Übertragungstechnik", 1979, Seiten 65-71,
München, DE; C. EHRICKE et al.:
"Kennzeichenumsetzer zur Übertragung
vermittlungstechnischer Zeichen in
Digital-Fernsprechverbindungen"
IBM TECHNICAL DISCLOSURE BULLETIN, Band 25,
Nr. 11A, April 1983, Seiten 5788-5790, New York, US; S.
HUON et al.: "PCM signalling adapter in a distributed
processing time-division PABX"
COMMUTATION & TRANSMISSION, Band 6, Nr. 3,
September 1984, Seiten 5-20, Issy-les-Moulineaux, FR;
J. TANGUY et al.: "Adaptateurs de signalisation"

(73) Patentinhaber: **Siemens Aktiengesellschaft,
Wittelsbacherplatz 2, D-8000 München 2(DE)**

(72) Erfinder: **Günther, Wolfdietrich, Korbinianstrasse 14,
D-8190 Wolfratshausen(DE)**

(56) Entgegenhaltungen: (Fortsetzung)

MICROPROCESSING AND MICROPROGRAMMING,
Band 10, Nr. 5, Dezember 1982, Seiten 311-324,
North-Holland Publishing Co., Amsterdam, NL; B.
BARTOLOMMEI et al.: "Microprogramming techniques
in front-end processors of the PROTEO digital
switching system"

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine Einrichtung zur individuellen Typenkennzeichnung von Kennzeichenumsetzer-Baugruppen nach dem Oberbegriff des Patentanspruchs 1.

Mit dem Einsatz von digitalen Zeitmultiplex-Übertragungssystemen wurde es erforderlich, geeignete Kennzeichenumsetzer für vermittlungstechnische Signale zu entwickeln. Hierbei ist es erforderlich, auch die analogen vermittlungstechnischen Informationen zu digitalisieren und in den Pulsrahmen des Zeitmultplexsystems einzufügen. In der Gegenrichtung werden als Zeitmultiplexsignale empfangene Kennzeichenwörter wieder in analoge vermittlungstechnische Informationen umgesetzt. Ein solches Kennzeichenumsetzergerät ist in der Siemens-Zeitschrift, 49 (1975) Heft 7, Seite 466 bis 472 und in der Zeitschrift COMMUTATION & TRANSMISSION, Band 6, Nr. 3, Sept. 1984, Seiten 5 bis 20 beschrieben. Entsprechend der Vielzahl der vorhandenen Signalisierungssysteme ist es erforderlich, unterschiedliche Kennzeichenumsetzer-Baugruppen (KZU-B) zu verwenden.

Mit dem zunehmenden Einsatz von Mikroprozessoren wird es möglich, für unterschiedliche Signalisierungssysteme unterschiedliche Programme oder Programmteile vorzusehen und im übrigen die Baugruppen unverändert zu lassen. Es müssen nur noch unterschiedliche kanalindividuelle Kennzeichenumsetzer (KZU-B) verwendet werden, die an die unterschiedlichen Vermittlungssysteme (beispielsweise zweidrähtig oder vierdrähtig durchschaltende Vermittlungsstellen) angepaßt oder entsprechend umschaltbar sind. Die entsprechende Typenkennzeichnung der Kennzeichenumsetzer muß den Mikroprozessoren des zentralen Verarbeitungsteils mitgeteilt werden. Hierbei muß berücksichtigt werden, daß eine große Typenvielfalt von Kennzeichenumsetzern vorhanden ist, jedoch nur eine geringe Anzahl von Verbindungen zwischen Kennzeichenumsetzer und zentralen Verarbeitungsteil zur Verfügung stehen und nur im geringer Zeitaufwand im zentralen Verarbeitungsteil für die Auswertung der Typenkennzeichnung möglich ist.

Aufgabe der Erfindung ist es, eine Einrichtung zur Typenkennzeichnung von Kennzeichenumsetzer mit geringem Übertragungsaufwand und geringem Zeitaufwand bei der Auswertung im zentralen Verarbeitungsteil anzugeben.

Die Aufgabe wird durch die im Patentanspruch 1 angegebenen Merkmale gelöst.

Vorteilhafte Ausbildungen sind in den Unteransprüchen angegeben.

Bei einer Verarbeitungswortbreite von 8 Bits wird davon ausgegangen, daß die Kennzeicheninformation eines jeden an den Kennzeichenumsetzer angeschlossenen Fernsprechkanals innerhalb eines Bytes übertragen wird. Hierzu sind bis zu 6 Bits bei einigen Kennzeichenumsetzern/Signalisierungssystemen erforderlich. Die restlichen 2 Bits reichen jedoch nur aus, vier unterschiedliche Kennzeichenumsetzer-Typen zu kennzeichnen. Deshalb werden jeweils die zur Verfügung stehenden Bits von allen Kennzeichenumsetzer-Schaltungen einer Kennzeichenumsetzer-Baugruppe zu einem "Typenkennzeichnungswort" zusammengefaßt, mit dem dieselbe Typenkennzeichnung für alle Kennzeichenumsetzer-Schaltungen einer Baugruppe durchgeführt wird. Auf einer Kennzeichenumsetzer-Baugruppe sind z.B. drei Kennzeichenumsetzer-Schal tungen realisiert, an die jeweils ein Fernsprechkanal angeschlossen ist. Die Kennzeichenumsetzer-Baugruppen weisen jeweils einen seriellen Datenausgang in Tri-State-Logik auf. Diese Ausgänge werden zusammengeschaltet, wodurch nur ein einziger Anschluß im zentralen Verarbeitungsteil erforderlich ist.

Bei einer mit "Transparenz" bezeichnenden Betriebsart, bei der keine ausführliche logische Verarbeitung der Vermittlungssignale erforderlich ist, wird bei jedem Fernsprechkanal individuell diese Kennzeichnung vorgesehen. Es verbleiben auch dann noch genügend Kombinationen, um eine ausreichende Anzahl von Kennzeichenumsetzertypen zu unterscheiden.

Ausführungsbeispiele der Erfindung werden anhand von Figuren 1 bis 4 durchgeführt.

Es zeigen

Fig. 1 ein Blockschaltbild der Kennzeichenumsetzer-Zentrale,

Fig. 2 ein erstes Ausführungsbeispiel der Erfindung,

Fig. 3 ein Zeitdiagramm zur Übertragung der Typenkennzeichnung und

Fig. 4 ein weiteres Ausführungsbeispiel der Erfindung.

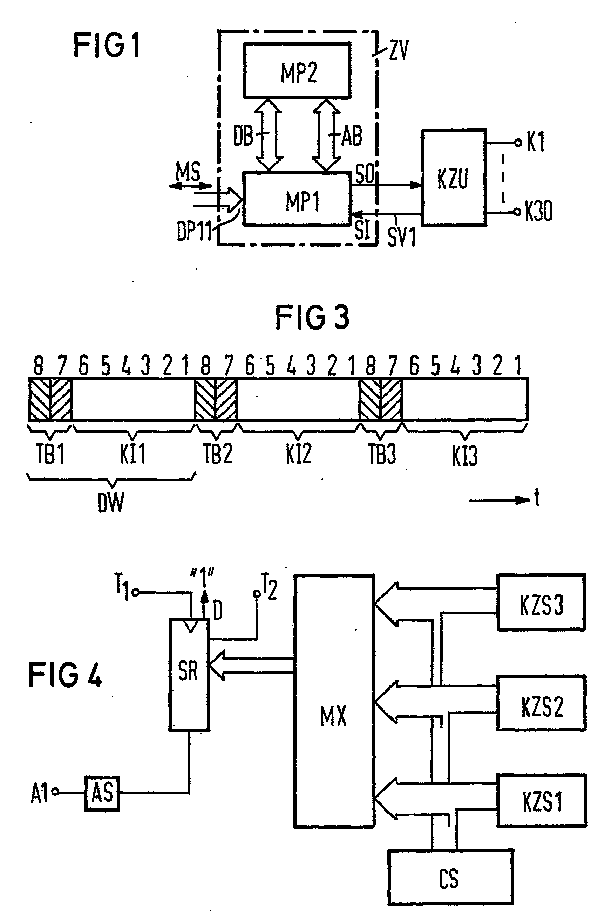

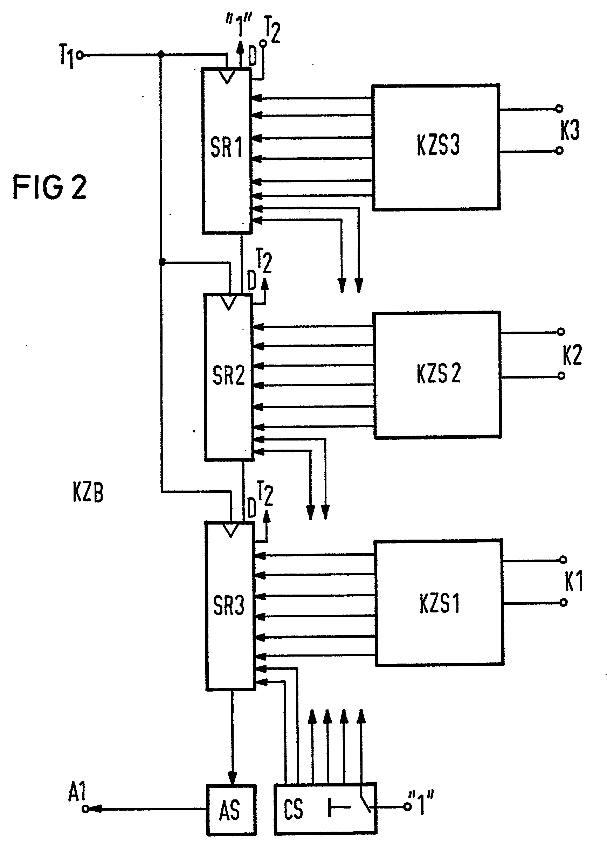

In Fig. 1 ist ein Prinzipschaltbild einer Kennzeichenumsetzer-Zentrale dargestellt. Sie enthält einen zentralen Verarbeitungsteil ZV mit einem Synchron-Prozessor MP1 und einem Logik-Prozessor MP2, die über einen Datenbus DB und einen Adressenbus AB miteinander verbunden sind. Der Synchron-Prozessor weist mehrere Datenports auf. Einem Datenport DP11 wird das digitale Zeitmultiplexsignal MS zugeführt, in dem die Signalisierungsinformation in Form von Kennzeichenwörtern mit 4 Bits Länge enthalten ist. Jeweils zwei dieser Kennzeichenwörter sind zu einem Kennzeichen-Datenwort zusammengefaßt. In der Gegenrichtung werden über diesen Datenport die Kennzeichenwörter ebenfalls im Multiplexbetrieb ausgegeben. Der Synchron-Prozessor übernimmt im wesentlichen die zeitliche Steuerung, während der Logik-Prozessor für die logische Anpassung an die verschiedenen Signalisierungssysteme, Schutzzeiten und logische Verknüpfungen in Abhängigkeit von vorangegangenen Vermittlungszuständen vorgesehen ist. Über einen seriellen Datenausgang SO und einen seriellen Dateneingang SI ist ein Kennzeichenumsetzer KZU angeschaltet. An diesen sind bis zu 30 Fernsprechkanäle K1 bis K30 angeschlossen. Im Kennzeichenumsetzer werden die analogen Vermittlungskriterien in digitale Kennzeicheninformation umgesetzt und über die serielle Datenverbindung SV1 zum seriellen Dateneingang SI des Synchron-Prozessors übertragen. In der Gegenrichtung wird die entsprechende Kennzeicheninformation vom seriellen Ausgang SO des Synchron-Prozessors zum Kennzeichenumsetzer übertragen und hier in analoge Vermittlungsinformation umgesetzt.

Der Kennzeichenumsetzer KZU enthält mehrere Kennzeichenumsetzer-Baugruppen KZB mit jeweils beispielsweise $k = 3$ Kennzeichenumsetzer-Schaltungen KZS, an die jeweils ein Fernsprechkanal angeschlossen ist. Eine solche Kennzeichenumsetzer-Baugruppe ist in Fig. 2 dargestellt. Die Ausgänge der Kennzeichenumsetzer-Schaltungen KZS3, KZS2 und KSZ1 sind mit Parallel-Eingängen von drei in Serie geschalteten Schieberegistern SR1, SR2 und SR3 verbunden. Insgesamt enthält jedes Schieberegister 8 Kippstufen, von denen jeweils 6 Kippstufen die Kennzeicheninformation mit $m = 6$ Bits übernehmen. Die Paralleleingänge der beiden übrigen am Schieberegisterausgang liegenden Kippstufen sind für jeweils $n = 2$ Typenkennzeichnungsbits TB vorgesehen und mit einem Programmierschalter CS verbunden. Mit Hilfe dieses Programmierschalters wird die Typenkennzeichnung durch Einstellen unterschiedlicher Binärkombinationen durchgeführt. Statt des Programmierschalters können natürlich auch Lötbrücken verwendet werden oder die entsprechenden Paralleleingänge können bei unterschiedlichen Kennzeichenumsetzer-Baugruppen fest verdrahtet sein. Die Übernahme der Kennzeicheninformation und der Typenkennzeichnung erfolgt mit einem Übernahme-Takt $T_2$, der vom Synchron-Prozessor oder von einer gesonderten Taktversorgung geliefert wird. Die in die Schieberegister parallel eingeschriebene Information wird mit einem Schiebetakt $T_1$ seriell über eine Ausgangsschaltung AS ausgegeben. Bei einem hier beispielsweise betrachteten PCM-Übertragungssystem System PCM 30 erfolgt dies mit einer Bitrate von 64 kbit/s. Die Ausgangsschaltung AS weist einen Tri-State-Ausgang auf, der den seriellen Ausgang A1 der Kennzeichenumsetzer-Baugruppe bildet. Auf diese Weise können alle Ausgänge der Kennzeichenumsetzer-Baugruppen zusammengeschaltet und mit dem Serieneingang SI des Synchron-Prozessors verbunden werden.

In Fig. 3 ist ein Ausschnitt der vom Kennzeichenumsetzer zum Synchron-Prozessor übertragenen seriellen Kennzeicheninformation dargestellt. Es sind drei Datenwörter DW mit jeweils einem Byte Länge dargestellt, die jeweils die Kennzeicheninformation KI und jeweils 2 Typenkennzeichnungsbits TB enthalten. Zuerst werden 2 Typenkennzeichnungsbits TB1 aus dem Schieberegister SR3 ausgegeben, dann folgt die Kennzeichnungsinformation KI1 des ersten Fernsprechkanals K1. Anschließend folgen 2 weitere Typenkennzeichnungsbits TB2, dann die Kennzeicheninformation KI2 des zweiten Fernsprechkanals K2 usw..

Der Zustand "Transparenz" wird kanalindividuell durch die Kombination "11" der Typenkennzeichnungsbits TB eingestellt. In diesem Fall wird die Auswertung dieser Betriebsart von dem Synchron-Prozessor durchgeführt und eine Bearbeitung durch den Logik-Prozessor entfällt. Wird nur die Betriebsart "Transparenz" gefordert, kann der Logik-Prozessor entfallen. Ebenso wird bei einem defekten Logikprozessor bei den Kennzeichenumsetzer-Baugruppen mit der Betriebsart "Transparenz", der Betrieb noch korrekt durchgeführt. Statt der möglichen $2^{nk} = 2^2 \times 3 = 64$ Binärkombinationen wird diese Anzahl bei Berücksichtigung der Betriebsart "Transparenz" auf $(2^n-1)^k = (2^2-1)^3 = 27$ eingeschränkt.

In Fig. 4 ist ein weiteres Ausführungsbeispiel einer Einrichtung zur Typenkennzeichnung dargestellt. Sie enthält nur ein 8 Bits langes Schieberegister als Parallel/Seriell-Umsetzer SR. Die Paralleleingänge dieses Schieberegisters sind über einen Multiplexer MX mit den Ausgängen der Kennzeichenumsetzer-Schaltungen KZS und des Codierschalters CS verbunden. Der Übernahmetakt T2 kommt jetzt im Abstand eines Bytes (bezogen auf den Schiebetakt $T_1$). Nacheinander werden die Kennzeicheninformation und die zugehörigen Typenkennzeichnungsbits der Kennzeichenumsetzer-Schaltungen KZS1, KZS2 und KZS3 in das Schieberegister eingegeben und seriell übertragen. Anschließend erfolgt die Übertragung von einer anderen Kennzeichenumsetzer-Baugruppe.

Eine andere Möglichkeit ist durch das Schleifen der seriellen Ausgänge über sämtliche Kennzeichenumsetzer-Baugruppen gegeben. Hierbei tritt jedoch eine größere zeitliche Verzögerung der Kennzeicheninformation auf.

## Patentansprüche

1. Einrichtung zur individuellen Typenkennzeichnung von Kennzeichenumsetzer-Baugruppen (KZB) mit jeweils mehreren (k) Kennzeichenumsetzer-Schaltungen (KZS), mit einer Datenverbindung zwischen der Kennzeichenumsetzer-Baugruppe (KZB) und einem zentralen Verarbeitungsteil (ZV), über die die in binäre Kennzeicheninformation umgesetzten Schaltkennzeichen der analogen Fernsprechkanäle in Form von Datenwörtern übertragen werden, dadurch gekennzeichnet, daß einer Kennzeichenumsetzer-Schaltung (KZS) zugeordnete m (6) Kennzeichinformationsbits (KI) und n (2) Typenkennzeichnungsbits (TB) jeweils zu einem Datenwort (DW) zusammengefaßt und im Zeitmultiplexbetrieb zum zentralen Kennzeichenumsetzer-Verarbeitungsteil (ZV) in serieller Form übertragen werden und daß alle nk (6) Typenkennzeichnungsbits (TB1, TB2, TB3) der k (3) Kennzeichenumsetzer-Schaltungen (KZS1, KZS2, KZS3) einer Kennzeichenumsetzer-Baugruppe (KZB) gemeinsam zur Codierung von maximal $2^{nk}$ ($2^6$) unterschiedlichen - jedoch für alle Kennzeichenumsetzer-Schaltungen (KZS1, KZS2, KZS3) einer Kennzeichenumsetzer-Baugruppe (KZB) gleiche - Typenkennzeichnungen vorgesehen sind.

2. Einrichtung zur Typenkennzeichnung nach Anspruch 1, dadurch gekennzeichnet, daß jeweils eine Kombination ("11") von n (2) Bits je Datenwort für eine kanalindividuelle Kennzeichnung des Zustandes "Transparenz" vorgesehen ist und nur die restlichen $(2^n -1)^k$ Kombinationen zur Typenkennzeichnung vorgesehen sind.

3. Einrichtung zur Typenkennzeichnung nach Anspruch 1 oder Anspruch 2, dadurch gekennzeichnet, daß die Länge der Datenwörter 8 Bits umfaßt und daß jeweils 2 Typenkennzeichnungsbits (TB) in einem Datenwort enthalten sind.

4. Einrichtung zur Typenkennzeichnung nach Anspruch 2, dadurch gekennzeichnet, daß zur Kennzeichnung des Zustandes Transparenz kanalindividuell die Binärkombination "11" vorgesehen ist.

5. Einrichtung zur Typenkennzeichnung nach einem der vorhergehenden Ansprüche, dadurch gekennzeichnet, daß die Typenkennzeichnung mit Hilfe von Codierschaltern (CS) oder Lötbrücken einstellbar ist.

6. Einrichtung zur Typenkennzeichnung nach einem der vorhergehenden Ansprüche, dadurch gekennzeichnet, daß auf jeder Kennzeichenumsetzer-Baugruppe k in Serie geschaltete Schieberegister (SR1, SR2,SR3) mit jeweils m+n (8) Bits Länge als Parallel/Seriell-Umsetzer vorgesehen sind.

7. Einrichtung zur Typenkennzeichnung nach einem der Ansprüche 1 bis 5, dadurch gekennzeichnet, daß ein Schieberegister (SR) mit m+n (8) Bits Länge als Parallel/Seriell-Umsetzer und ein Multiplexer (MX) vorgesehen sind, der zwischen den Paralleleingängen des Schieberegisters (SR) und den Ausgängen der Kennzeichenumsetzer-Schaltungen (KZS1 bis KZS3) und des Codierschalters (CS) eingeschaltet ist.

8. Einrichtung zur Typenkennzeichnung nach Anspruch 6 oder 7, dadurch gekennzeichnet, daß der Parallel/Seriell-Umsetzer eine Tri-State-Ausgangsschaltung (AS) aufweist und daß die seriellen Ausgänge (A1) der Kennzeichenumsetzer-Baugruppen (KZB) zusammengeschaltet sind.

## Claims

1. Device for the incividual type identification of signaling information conversion modules (KZB) with several (k) signalling information conversion circuits (KZS) in each case, with a data link between the signalling information conversion module (KZB) and a central processing section (ZV) via which the switching signals of the analogue telephone channels, converted into binary signalling information, are transmitted in the form of data words, characterized in that m (6) signalling information bits (KI) allocated to a signalling information conversion circuit (KZS) and n (2) type identification bits (TB) are in each case combined to form one data word (DW) and are transmitted in serial form in time-division multiplex mode to the central signalling information conversions processing section (ZV) and in that all nk (6) type identification bits (TB1, TB2, TB3) of the k (3) signalling information conversion circuits (KZS1, KZS2, KZS3) of a signalling information conversion module (KZB) jointly intended for coding a maximum of $2n^{nk}$ ($2^6$) different – but identical for all signalling information conversion circuits (KZS1, KZS2, KZS3) of a signalling information conversion module (KZB) – type identifications are provided.

2. Device for type identification according to Claim 1, characterized in that in each case a combination ("11") of n (2) bits per data word is provided for a channelindividual identification of the "transparent" state and only the remaining $(2^n-1)^k$ combinations are provided for type identification.

3. Device for type identification according to Claim 1 of Claim 2, characterized in that the length of the data words is 8 bits and in that each case 2 type identification bits (TB) are contained in one data word.

4. Device for type identification according to Claim 2, characterized in that the binary combination "11" is provided channel-individually for identifying the transparent state.

5. Device for type identification according to one of the preceding claims, characterized in that the type identification can be set with the aid of coding switches (CS) or solder links.

6. Device for type identification according to one of the preceding claims, characterized in that k seriesconnected shift registers (SR1, SR2, SR3) with m+n (8) bits length in each case are provided as parallel/serial converters in each signalling information conversion module.

7. Device for type identification according to one of Claims 1 to 5, characterized in that a shift register (SR) with m+n (8) bits length is provided as parallel/serial converter and a multiplex (MX) is provided which is inserted between the parallel inputs of the shift register (SR) and the outputs of the signalling information conversion circuits (KZS1 to KZS3) and of the coding switch (CS).

8. Device for type identification according to Claim 6 or 7, characterized in that the parallel/serial converter exhibits a tristate output circuit (AS) and in that the serial outputs (A1) of the signalling information conversion modules (KZB) are connected together.

## Revendications

1. Dispositif pour l'indication individuelle du type de sous-ensembles ou modules convertisseurs d'identifications (KZB) présentant chacun plusieurs (k) circuits convertisseurs d'identifications (KZS), dispositif qui comprend une liaison de données entre chaque module convertisseur d'identifications (KZB) et une partie centrale de traitement (ZV), par laquelle les indicatifs de commutation des voies téléphoniques analogiques, convertis en information d'identification binaire, sont transmis sous forme de mots de données, caractérisé en ce que m (6) bits d'information d'identification (KI) et n (2) bits indicateurs de type (TB), coordonnés à un circuit convertisseur d'identifications (KZS), sont réunis chaque fois en un mot de données (DW) et sont transmis sous forme sérielle et par multiplexage dans le temps à la partie centrale de traitement (ZV) et que tous les nk (6) bits indicateurs de types (TB1, TB2, TB3) des k (3) circuits convertisseurs d'identifications (KZS1, KZS2, KZS3) d'un module convertisseur d'identifications (KZB) sont prévus collectivement pour le codage de tout au plus $2^{nk}$ ($2^6$) indications de types différentes, mais qui sont les mêmes pour tous les circuits convertisseurs d'identifications (KZS1, KZS2, KZS3) d'un module convertisseur d'identifications (KZB).

2. Dispositif selon la revendication 1, caractérisé en ce qu'une combinaison ("11") de n (2) bits par mot de données est prévue pour l'indication individuelle, voie par voie, de l'état "transparence" et seulement les combinaisons (2ⁿ−1)k restantes sont prévues pour l'indication des types.

3. Dispositif selon la revendication 1 ou 2, caractérisé en ce que les mots de données ont une longueur de 8 bits et que chaque mot de données contient 2 bits indicateurs de type (TB).

4. Dispositif selon la revendication 2, caractérisé en ce que la combinaison binaire "11" est prévue pour indiquer l'état "transparence" individuellement, voir par voie.

5. Dispositif selon une des revendications précédentes, caractérisé en ce que l'identification des types peut être établie à l'aide d'interrupteurs de codage (CS) ou de pontages à la soudure.

6. Dispositif selon une des revendications précédentes, caractérisé en ce que k registres à décalage (SR1, SR2, SR3) branchés en série et ayant chacun une longueur de m+n (8) bits sont prévus sur chaque module convertisseur d'identifications en tant que convertisseurs parallèle/sériel.

7. Dispositif selon une des revendications 1 à 5, caractérisé en ce qu'il comprend un registre à décalage (SR) d'une longueur de m+n (8) bits en tant que convertisseur parallèle/sériel et un multiplexeur (MX) qui est interposé entre les entrées parallèles de registre à décalage (SR) et les sorties des circuits convertisseurs d'identifications (KZS1 à KZS3) et de l'interrupteur de codage (CS).

8. Dispositif selon la revendications 6 ou 7, caractérisé en ce que le convertisseur parallèle/sériel présente un circuit de sortie (AS) trois états et que les sorties sérielles (A1) des modules convertisseurs d'identifications (KZB) sont connectées ensemble.

FIG 1

FIG 3

FIG 4

FIG 2